# EUROPEAN PATENT SPECIFICATION

(11) **EP 4 343 927 B1**
(45) Date of publication and mention of the grant of the patent: **06.08.2025**
(21) Application number: 22940939.6
(22) Date of filing: 23.12.2022
(51) Int. Cl.: H01M 10/6554, H01M 10/6556, H01M 10/6568, H01M 10/647, F28D 1/03, H01M 10/613, H01M 10/625, H01M 10/6567, H01M 50/258, F28F 3/04, H01M 10/6557, F28F 3/12

(54) **LIQUID COOLING PLATE AND BATTERY PACK**
FLÜSSIGKEITSKÜHLPLATTE UND BATTERIEPACK
PLAQUE DE REFROIDISSEMENT DE LIQUIDE ET BLOC-BATTERIE

(30) Priority: 29.07.2022 CN 202222000223 U
(43) Date of publication of application: 27.03.2024
(73) Proprietor: Hithium Tech HK Limited, Hong Kong (HK)
(72) Inventor: HUANG, Weipeng, Fujian 361100 (CN); WU, Changfeng, Fujian 361100 (CN); JING, Xiaoxiao, Fujian 361100 (CN)
(74) Representative: RGTH
(86) International application number: PCT/CN2022/141651
(87) International publication number: WO 2024/021483

(56) References cited:
- CN-A- 105 659 430
- CN-A- 108 134 159
- CN-A- 108 183 285
- CN-A- 108 461 866
- CN-U- 208 507 894
- CN-U- 217 848 100
- US-A1- 2009 023 056
- US-A1- 2014 116 662
- US-A1- 2021 247 145
- US-B2- 9 620 829

## Description

### TECHNICAL FIELD

The present disclosure relates to the field of battery cooling technology, and specifically to a liquid cooling plate and a battery pack.

### BACKGROUND

An independent battery module usually contains multiple cells. During the charging and discharging processes of the battery module, the chemical reactions of the multiple cells inside the battery module will generate a large amount of heat. Currently, a liquid cooling plate is often used to exchange heat with the battery module. However, at present, a battery pack is usually composed of multiple battery modules so as to form a high-power battery, and when the liquid cooling plate is used to perform heat exchange with the multiple battery modules, it is often necessary to perform bending process on the liquid cooling plate to increase the heat exchange area between the liquid cooling plate and the battery modules and improve the efficiency of the heat exchange between the liquid cooling plate and the battery modules. When the liquid cooling plate is bent, however, a flow passage at the bent part is easy to deform, causing the flow passage at the bend to crack.

US 2014/116662 A1 discloses a serpentine heat exchanger includes a tube formed by bonding two press-molded tube sheets and folded back in a serpentine shape, and a corrugated fin arranged in a space enclosed by the tube that is folded-back. An inside of a folded-back portion of the tube includes a plurality of protrusions at a distance from one another, the protrusions protruding from one tube sheet and contacting the other tube sheet.

CN 108 134 159 A provides a heat management device and a battery module. The battery module comprises multiple layers of sub-modules. The heat management device comprises a liquid cooled flat tube arranged in the battery module, and the liquid cooled flat tube is in contact with each layer of sub-modules. The liquid cooled flat tube comprises a plurality of sub-flat tubes arranged at intervals and aplurality of bending and connecting parts, a space for accommodating the one layer of sub-modules or the two layers of sub-modules is formed between the every two adjacent sub-flat tubes, and the every two adjacent sub-flat tubes are communicated through the one bending and connecting part. Therefore, the liquid cooled flat tube can be made into a uniform shape, the sub-flat tubes of correspondinglengths are intercepted according to the lengths of all the sub-modules and are arranged at intervals, and the adjacent sub-flat tubes are connected through the one bending and connecting part.

### SUMMARY

The present invention provides a liquid cooling plate according to claim 1 and a battery pack, which are at least aimed to solve the problem that the flow passage at the bent part of the liquid cooling plate is prone to cracking.

A liquid cooling plate according to the invention comprises a first cooling plate, a second cooling plate and at least one reinforcement member. The first cooling plate comprises a first bent part. The second cooling plate is arranged side by side with the first cooling plate and is connected with the first cooling plate in a sealed manner. A cooling flow passage is formed between the second cooling plate and the first cooling plate. The second cooling plate comprises a second bent part. The second bent part corresponds to the first bent part. The at least one reinforcement member is disposed in the cooling flow passage between the first bent part and the second bent part. The reinforcement member has an arc-shaped structure, and a curvature in which the reinforcement member is bent is the same as a curvature in which the first bent part and the second bent part are bent.

In a possible implementation, a passage is formed in the reinforcement member, and the passage penetrates the reinforcement member along an extension direction of the cooling flow passage and is communicated with the cooling flow passage.

It can be seen that providing the passage ensures the smoothness of the cooling flow passage after the reinforcement member is added. When a heat exchange medium in the cooling flow passage flows through the reinforcement member between the first bent part and the second bent part, the heat exchanger medium can flow into the remaining of the cooling flow passage through the passage 71 of the reinforcement member.

In a possible implementation, the reinforcement member further comprises a plurality of spacer sheets, the plurality of spacer sheets are provided in the passage along an extension direction of the passage, and the plurality of spacer sheets divide the passage into a plurality of sub passages that are all communicated with the cooling flow passage.

It can be seen that the spacer sheets can be metal reinforcement ribs, thereby effectively preventing the spacer sheets from breaking due to the spacer sheets being impacted by the heat exchange medium for a long time. The plurality of sub passages can also allow the heat exchange medium between the first bent part and the second bent part to be diverted.

In a possible implementation, the reinforcement member comprises a first sub-part, a second sub-part and at least one third sub-part. The first sub-part and the second sub-part are arranged oppositely, and two ends of at least one of the third sub-parts are connected with the first sub-part and the second sub-part respectively, and at least one of the third sub-part divides the passage into at least two sub passages.

It can be seen that the reinforcement member can also be in an "I" shape, and the third sub-part divides the passage into a plurality of sub passages, so that the heat exchange medium is diverted in the sub f passages between the first bent part and the second bent part.

In a possible implementation, the reinforcement member may be made of foam metal.

It can be seen that the reinforcement member made of foam metal can slow down the flow rate of the heat exchange medium flowing through the reinforcement member, thereby reducing the lateral impact force generated by the heat exchange medium when flowing through the reinforcement member, and avoiding crack of the first bent part of the first cooling plate.

In a possible implementation, the reinforcement member is formed with a plurality of air holes, and the air holes are communicated with the cooling flow passage to allow the heat exchange medium in the cooling flow passage to pass through.

It can be seen that when the heat exchange medium flows through the foam metal, it can flow through the air holes communicated with the cooling flow passages, ensuring the circulation of the heat exchange medium between the first bent part and the second bent part.

In a possible implementation, the first cooling plate and the second cooling plate are formed with an accommodating space. The first cooling plate comprises a first body and a first flow passage provided on the first body. The first flow passage extends along the length direction of the first body and is formed by recessing from the first body in a direction away from the accommodating space. The second cooling plate comprises a second body and a second flow passage provided on the second body. The second body is arranged side by side with the first body on a side of the first body facing the accommodating space. The second flow passage extends along the length direction of the second body and is formed by recessing from the second body in a direction toward the accommodating space. The second flow passage corresponds to the first flow passage. The first body is connected with the second body in a sealed manner, and the second flow passage and the first flow passage are matched to jointly form the cooling flow passage surrounding the accommodating space.

It can be seen that the cooling flow passage jointly formed by the matched second flow passage and first flow passage allows a larger volume of the cooling flow passage, and more heat exchange medium can be input into the cooling flow passage at one time, effectively improving the heat exchange efficiency between the heat exchange medium and the battery modules.

In a possible implementation, the first flow passage comprises a first sub flow passage and a second sub flow passage distributed in the first body, and the first sub flow passage and the second sub flow passage are communicated with each other. The second flow passage comprises a third sub flow passage and a fourth sub flow passage distributed in the second body, and the third sub flow passage and the fourth sub flow passage are communicated with each other. The first sub flow passage corresponds to the third sub flow passage.

It can be seen that by dividing the first flow passage into the first sub flow passage and the second sub flow passage that are arranged side by side, the diversion path of the heat exchange medium in the first flow passage is increased, which can effectively improve the heat exchange efficiency; by dividing the second flow passage into the third sub flow passage and the fourth sub flow passage that are arranged side by side and communicated with each other, the diversion path of the heat exchange medium in the second flow passage is increased, which can effectively improve the heat exchange efficiency.

In a possible implementation, the liquid cooling plate comprises a plurality of reinforcement members, and the plurality of reinforcement members are disposed in the first sub flow passage and the third sub flow passage between the first bent part and the second bent part. The plurality of reinforcement members are disposed in the second sub flow passage and the fourth sub flow passage between the first bent part and the second bent part.

It can be seen that by providing the plurality of reinforcement members within the first sub flow passage and the third sub flow passage between the first bent part and the second bent part and within the second sub flow passage and the fourth sub flow passage between the first bent part and the second bent part, the side wall of each of the sub flow passages is reinforced to prevent the cooling flow passage between the first bent part and the second bent part from breaking.

A battery pack provided by an embodiment of the present disclosure comprises at least one battery module and the liquid cooling plate described in any of the embodiments of the present disclosure. The liquid cooling plate performs heat exchange with the at least one battery module.

In the liquid cooling plate and battery pack of the present disclosure, at least one reinforcement member is provided in the cooling flow passage between the first bent part of the first cooling plate and the second bent part of the second cooling plate, and the at least one reinforcement member can provide supporting force for the side wall of the cooling flow passage between the first bent part and the second bent part, thereby preventing the cooling flow passage from deforming and breaking, and ensuring the consistency of the cooling flow passage.

### BRIEF DESCRIPTION OF THE DRAWINGS

In order to explain the technical solutions of the embodiments of the present disclosure more clearly, the drawings to be used in the embodiments will be briefly introduced below.
FIG. 1 is a schematic three-dimensional structural diagram of a liquid cooling plate provided by an embodiment of the present disclosure;
FIG. 2 is a schematic three-dimensional exploded structural view of the liquid cooling plate shown in FIG. 2 provided by an embodiment of the present disclosure;
FIG. 3 is a schematic three-dimensional structural diagram of a reinforcement member in a liquid cooling plate provided by an embodiment of the present disclosure;
FIG. 4 is another schematic three-dimensional structural diagram of a reinforcement member in a liquid cooling plate provided by an embodiment of the present disclosure;
FIG. 5 is still another schematic three-dimensional structural diagram of a reinforcement member in a liquid cooling plate provided by an embodiment of the present disclosure;
FIG. 6 is still another schematic three-dimensional structural diagram of a reinforcement member in a liquid cooling plate provided by an embodiment of the present disclosure;
FIG. 7 is still another schematic three-dimensional structural diagram of a reinforcement member in a liquid cooling plate provided by an embodiment of the present disclosure;
FIG. 8 is still another schematic three-dimensional structural diagram of a reinforcement member in a liquid cooling plate provided by an embodiment of the present disclosure;
FIG. 9 is a schematic three-dimensional structural diagram of a first cooling plate in the liquid cooling plate provided by an embodiment of the present disclosure;
FIG. 10 is a schematic three-dimensional structural diagram of a second cooling plate in the liquid cooling plate provided by an embodiment of the present disclosure;
FIG. 11 is another schematic three-dimensional structural diagram of a second cooling plate in the liquid cooling plate provided by an embodiment of the present disclosure;
FIG. 12 is a schematic three-dimensional cross-sectional view of the liquid cooling plate shown in FIG. 1 along the line XII-XII provided by an embodiment of the present disclosure;
FIG. 13 is an enlarged schematic view of the liquid cooling plate at XIII shown in FIG. 12 provided by an embodiment of the present disclosure;
FIG. 14 is a schematic three-dimensional exploded structural diagram of a liquid cooling plate provided by an embodiment of the present disclosure;
FIG. 15 is another schematic three-dimensional exploded structural diagram of a liquid cooling plate provided by an embodiment of the present disclosure;
FIG. 16 is still another schematic three-dimensional exploded structural diagram of a liquid cooling plate provided by an embodiment of the present disclosure; and
FIG. 17 is a schematic three-dimensional structural diagram of a battery pack provided by an embodiment of the present disclosure.

### Reference numerals:

Liquid cooling plate 100;
First cooling plate 10, first body 11, first segment 111, second segment 113, third segment 115, end 112, first bent part 117, first connection part 12, first flow passage 13, first sub flow passage 131, second sub flow passage 133, second connection part 14, first flow disturbing part 15;
First through-hole 20;
Second cooling plate 30, second body 31, fourth segment 311, fifth segment 313, sixth segment 315, end 312, second bent part 317, third connection part 32, second flow passage 33, third sub flow passage 331, fourth sub flow passage 333, fourth connection part 34, second flow disturbing part 35;
Second through-hole 40;
Cooling flow passage 50;
Liquid inlet pipe 60;
Reinforcement member 70, passage 71, air hole 72, sub passage 711, spacer sheet 73, first sub-part 75, second sub-part 76, third sub-part 77;
Liquid outlet pipe 80;
Accommodating space 90;
Battery module 300;
Upper cover 400;
Lower box body 500; and
Battery pack 1000.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, but not all the embodiments. Based on the embodiments in the present disclosure, all other embodiments obtained by those of ordinary skill in the art without creative efforts fall within the protection scope of the present disclosure.

The embodiments are described below with reference to the accompanying drawings, illustrating specific embodiments of the present disclosure that can be implemented. The directional terms mentioned herein, such as "up", "down", "front", "back", "left", "right", "inside", "outside", "side", etc., are only with reference to the orientations of the drawings. Therefore, the directional terms used are for the purpose of better and clearer description and understanding of the present disclosure and do not indicate or imply that any device or component referred to must have a particular orientation or be constructed and operated in a particular orientation, and therefore cannot be construed as any limitation on the present disclosure.

In addition, the serial numbers assigned to components herein, such as "first", "second", etc., are only used to distinguish the described objects and do not have any sequential or technical meaning. The terms "connecting" and "coupling" mentioned in the present disclosure comprise direct and indirect connecting (coupling) unless otherwise specified.

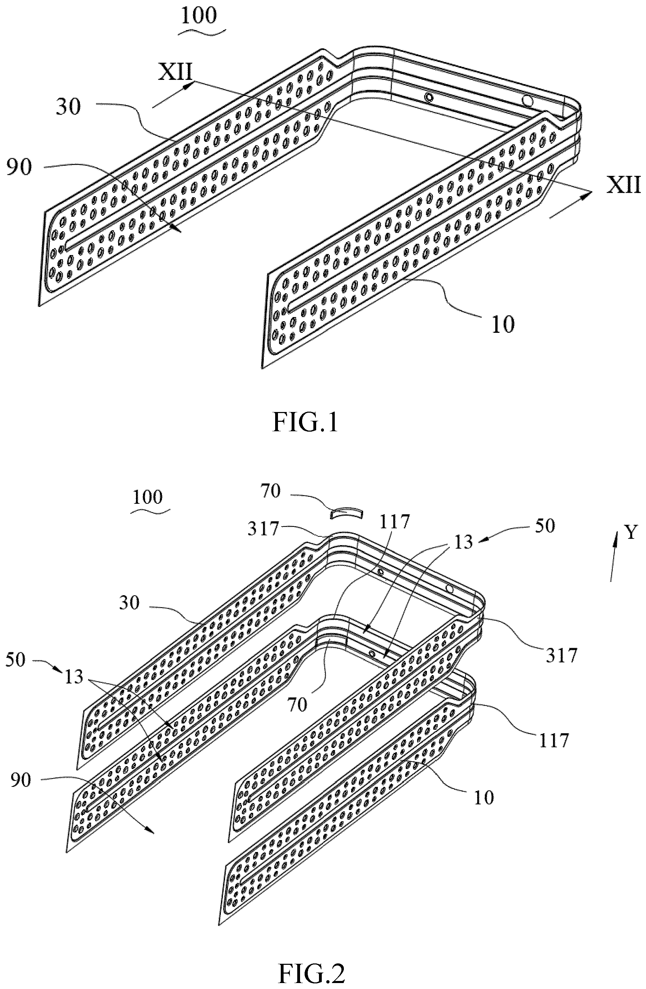

Referring to FIG. 1 and FIG. 2, in an embodiment of the present disclosure, there is provided a liquid cooling plate 100. The liquid cooling plate 100 comprises a first cooling plate 10, a second cooling plate 30 and at least one reinforcement member 70. The first cooling plate 10 comprises a first bent part 117. The second cooling plate 30 is arranged side by side with the first cooling plate 10 and is connected with the first cooling plate 10 in a sealed manner. A cooling flow passage 50 is formed between the second cooling plate 30 and the first cooling plate 10. The second cooling plate 30 comprises a second bent part 317. The second bent part 317 corresponds to the first bent part 117. The at least one reinforcement member 70 is disposed in the cooling flow passage 50 between the first bent part 117 and the second bent part 317.

An independent battery module usually contains multiple cells. During the charging and discharging process of the battery module, the chemical reactions of the multiple cells inside the battery module will generate a large amount of heat. Currently, a liquid cooling plate is often used to exchange heat with the battery module. However, at present, a battery pack is usually composed of multiple battery modules so as to form a high-power battery, and when the liquid cooling plate is used to exchange heat with the multiple battery modules, it is often necessary to perform bending process on the liquid cooling plate to increase the heat exchange area between the liquid cooling plate and the battery modules and improve the efficiency of the heat exchange between the liquid cooling plate and the battery modules. When the liquid cooling plate is bent, however, a flow passage at the bent part is easy to deform, causing the flow passage at the bend to crack.

In the liquid cooling plate 100 of the present disclosure, at least one reinforcement member 70 is provided between the first bent part 117 of the first cooling plate 10 and the second bent part 317 of the second cooling plate 30. The at least one reinforcement member 70 can provide supporting force for side walls of the cooling flow passage 50 between the first bent part 117 and the second bent part 317, thereby preventing the cooling flow passage 50 at the bent part from deforming and breaking, and ensuring the consistency of the cooling flow passage 50.

Referring to FIG. 2, the first cooling plate 10 and the second cooling plate 30 are a pair of components, and the number of the first cooling plates 10 is consistent with the number of the second cooling plates 30. The first cooling plate 10 and the second cooling plate 30 are together formed with an accommodating space 90, the accommodating space 90 is used to place the battery modules 300 therein, and the cooling flow passage 50 surrounds the accommodating space 90. Specifically, the second cooling plate 30 is arranged side by side with the first cooling plate 10 on a side of the first cooling plate 10 closer to the accommodating space 90.

The number of the first cooling plates 10 and the number of the second cooling plates 30 may be one or more so as to perform heat exchange for a larger number of battery modules 300.

The first cooling plate 10 and the second cooling plate 30 are of the same material, which can be a metal material, or a non-metallic material with good thermal conductivity. The specific material is not limited herein. In an example, the first cooling plate 10 and the second cooling plate 30 can be made of aluminum, which can reduce the weight of the liquid cooling plate 100, thereby reducing the overall weight of the battery pack 1000.

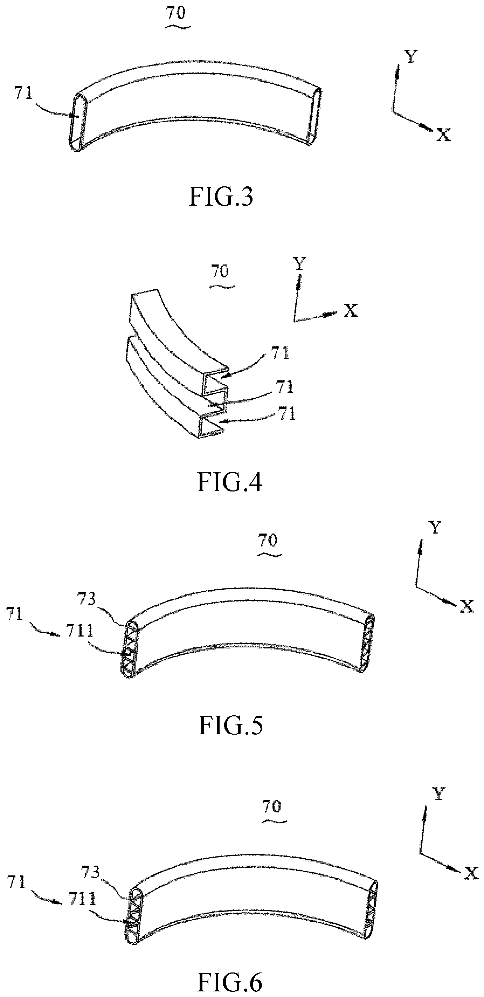

Please refer to FIGS. 2 and 3. In an embodiment, a passage 71 is formed in the reinforcement member 70. The passage 71 penetrates the reinforcement member 70 along the extension direction of the cooling flow passage 50 and is communicated with the cooling flow passage 50.

In an example, the reinforcement member 70 may be made of metal material, thereby increasing the strength of the reinforcement member 70.

The reinforcement member 70 can be fixedly installed on the side wall of the first bent part 117 through welding connection, and then the second cooling plate 30 is connected with the first cooling plate 10 through welding connection in a sealed manner; or the reinforcement member 70 is fixedly installed on the side wall of the second bent part 317 through welding connection, and then the second cooling plate 30 is connected with the first cooling plate 10 through welding connection in a sealed manner.

Specifically, the reinforcement member 70 has an arc-shaped structure as a whole, and a curvature in which the reinforcement member 70 is bent is the same as the curvature in which the first bent part 117 is bent and the curvature in which the second bent part 317 is bent, so that when the reinforcement member 70 is disposed in the cooling flow passage 50 between the first bent part 117 and the second bent part 317, the side surfaces of the reinforcement member 70 can be attached to the side walls on both sides of the cooling flow passage 50, thereby providing support force for the cooling flow passage 50 between the first bent part 117 and the second bent part 317, preventing the side walls of the cooling flow passage 50 between the first bent part 117 and the second bent part 317 from deforming and breaking, ensuring the consistency of the cooling flow passage 50, and ensuring the safety of the liquid cooling plate 100.

By providing the passage 71, it ensures the smoothness of the cooling flow passage 50 after the reinforcement member 70 is added. When the heat exchange medium in the cooling flow passage 50 flows through the reinforcement member 70 between the first bent part 117 and the second bent part 317, the heat exchange medium can flow into the remaining of the cooling flow passage 50 through the passage 71 of the reinforcement member 70.

The number of passages 71 is one, as shown in FIG. 3. The height of the passage 71 (the height refers to the distance extending in the Y direction shown in FIG. 3) is within a preset range of the height of the reinforcement member 70. For example, the height of the passage 71 is 80% to 90% of the height of the reinforcement member 70, if the height of the reinforcement 70 is noted as H, the height of the passage 71 can be 80%H, 81%H, 82%H, 83%H, 84%, 85%H, 86%H, 87%H, 88%H, 89%H, or 90%H, thereby keeping the volumes of the heat exchange medium before and after flowing through the reinforcement 70 as consistent as possible to avoid the large lateral impact force generated by the heat exchange medium at the bent part due to the large change in flow rate, thereby preventing the first bent part 117 of the first cooling plate 10 from breaking. In addition, it can also improve the cooling or preheating efficiency of the battery modules 300 by the liquid cooling plate 100.

Please refer to FIGS. 2 and 4. In another embodiment, the number of passages 71 may be multiple. The multiple passages 71 are arranged side by side in the Y direction, and the cross-sectional projection of the reinforcement member 70 is square-wave-shaped. The side walls of two of the passages 71 are respectively attached to the first bent part 117 of the first cooling plate 10, and the side walls of the passage 71 located in the middle position are attached to the second bent part 317 of the second cooling plate 30. In this way, the thickness of the first cooling plate 10 at the first bent part 117 (the distance extended in the X direction as shown in FIG. 4) is increased, which prevents the first bent part 117 of the first cooling plate 10 from breaking due to a too large lateral impact force generated by the heat exchange medium when flowing through passage 71.

Please refer to FIG. 5. In another embodiment, the reinforcement member 70 further comprises a plurality of spacer sheets 73. The plurality of spacer sheets 73 are disposed in the passage 71 along the extension direction of the passage 71 and divide the passage 71 into a plurality of sub passages 711, and the plurality of sub passages 711 are all communicated with the cooling flow passage 50 (shown in FIG. 2).

The spacer sheets 73 may be metal reinforcement ribs, thereby effectively preventing the spacer sheets 73 from breaking due to the spacer sheets 73 being impacted by the heat exchange medium for a long time.

For example, as shown in FIG. 5, a plurality of spacer sheets 73 can be arranged side by side and in parallel in the height direction of the reinforcement member 70 (the Y direction shown in FIG. 5), and the intervals between two adjacent spacer sheets 73 are the same, so that the passage 71 is divided into a plurality of sub passages 711 in the height direction. In this way, the entire side wall of the passage 71 can be attached to the side wall of the first bent part 117. Compared with the reinforcement member 70 described in the previous embodiment, the reinforcement member 70 in the present embodiment can allow the first cooling plate 10 as a whole to be thickened at the first bent part 117, and the lateral impact force generated by the heat exchange medium when flowing through the plurality of sub passages 711 can all be forced on the first side of the reinforcement member 70 to prevent the heat exchange medium from directly impacting the first cooling plate 10, thereby avoiding the crack of the first cooling plate 10 at the first bent part 117, and effectively increasing the service life of the first cooling plate 10.

For another example, as shown in FIG. 6, the plurality of spacer sheets 73 are arranged side by side in the passage 71 in the height direction of the passage 71, the plurality of spacer sheets 73 are divided into multiple groups, each group comprises two spacer sheets 73. The two spacer sheets 73 of each group are arranged in a V shape in the passage 71, and the spacer sheets 73 in different groups are not connected with each other.

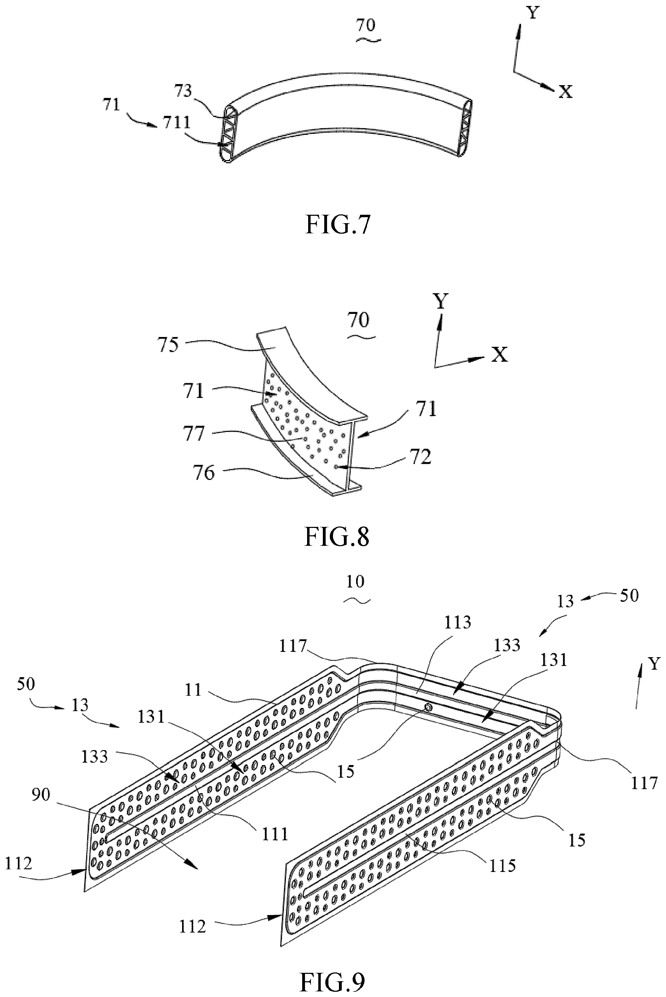

For another example, as shown in FIG. 7, the plurality of spacer sheets 73 are arranged side by side in the passage 71 in the height direction of the passage 71. Except for the two spacer sheets 73 located outermost in the height direction of the passage 71, the remaining spacer sheets 73 are connected end to end, so that four adjacent spacers 73 form an M shape.

Please refer to FIG. 8. In yet another embodiment, the reinforcement member 70 comprises a first sub-part 75, a second sub-part 76 and at least one third sub-part 77. The first sub-part 75 and the second sub-part 76 are arranged oppositely, and two ends of the at least one third sub-part 77 are connected with the first sub-part 75 and the second sub-part 76 respectively. The at least one third sub-part 77 divides the passage 71 into at least two sub passages 711. The number of the third sub-parts 77 may be one or more. When the number of the third sub-parts 77 is one, the structure of the reinforcement member 70 is as shown in FIG. 8. When the number of third sub-parts 77 is multiple, the multiple third sub-parts 77 are arranged in parallel between the first sub-part 75 and the second sub-part 76, dividing the passage 71 into a plurality of sub passages 711.

Please refer to FIG. 8. In another embodiment, the reinforcement member 70 may be made of foam metal. The foam metal is formed with a plurality of air holes 72, and the plurality of air holes 72 are communicated with the cooling flow passage 50 to allow the heat exchange medium in the cooling flow passage 50 to pass through. The heat exchange medium can enter the cooling flow passage 50 through the plurality of air holes 72. The foam metal is arranged between the first bent part 117 and the second bent part 317, which can slow down the flow rate of the heat exchange medium flowing through the reinforcement member 70, thereby reducing the lateral impact force generated by the heat exchange medium when flowing through the reinforcement member 70, and avoiding cracking of the first bent part 117 of the first cooling plate 10.

The heat exchange medium comprises a liquid (such as water, water-alcohol mixture) medium. For example, in an example, the heat exchange medium may be water.

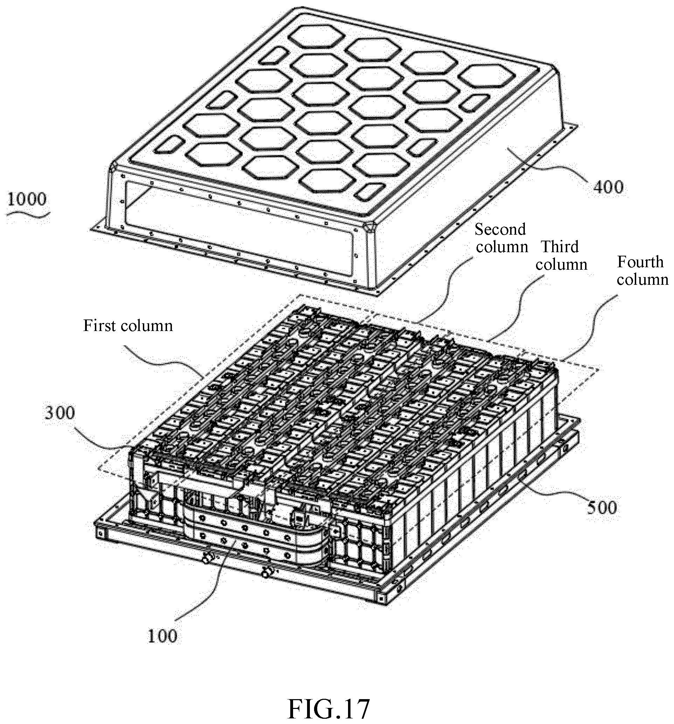

Referring to FIGS. 2 and 17, it should be noted that the heat exchange medium can cool or preheat the battery modules 300. When the battery modules 300 need to be heat exchanged, the heat exchange medium is input into the cooling flow passage 50. Since the battery modules 300 are attached to the liquid cooling plate 100, the heat exchange medium in the cooling flow passage 50 can perform heat exchange through the liquid cooling plate 100. The battery modules 300 can be cooled or preheated by adjusting the temperature of the input heat exchange medium.

In some embodiments, in a low-temperature environment, the battery modules 300 have reduced charging and discharging performance due to the reduced activity of positive and negative electrode materials and the reduced conductivity of the electrolyte of the battery cells in the battery modules 300. In this case, it needs to introduce the heat exchange medium with higher temperature into the cooling flow passage 50 so as to allow the battery modules 300 to reach a suitable temperature. At the same time, the liquid cooling plate 100 can be attached to multiple battery modules 300, so that the liquid cooling plate 100 can exchange heat with the multiple battery modules 300, effectively improving the preheating efficiency of the liquid cooling plate 100 for the battery pack 1000.

In some embodiments, in a high-temperature environment, the charging efficiency of the cells in the battery modules 300 will be low and the battery capacity will be reduced, and the battery modules 300 will dissipate heat during operation, resulting in the temperature of the battery modules 300 too high, and thus the heat of the battery modules 300 needs to be dissipated through the liquid cooling plate 100. In this case, it needs to introduce the heat exchange medium with a lower temperature into the cooling flow passage 50 so that the heat exchange medium in the cooling flow passage 50 can take away the heat dissipated by the battery module 300 to allow the temperature of the battery module 300 to be reduced to a suitable temperature. At the same time, the liquid cooling plate 100 is attached to multiple battery modules 300, so that the liquid cooling plate 100 can exchange heat with the multiple battery modules 300 at the same time, effectively improving the cooling efficiency of the liquid cooling plate 100 for the battery pack 1000.

In an embodiment of the present disclosure, multiple columns of battery modules 300 are placed in the accommodating space 90 so that the liquid cooling plate 100 is attached to the multiple columns of battery modules 300, thereby improving the cooling efficiency of the liquid cooling plate 100 for the battery modules 300.

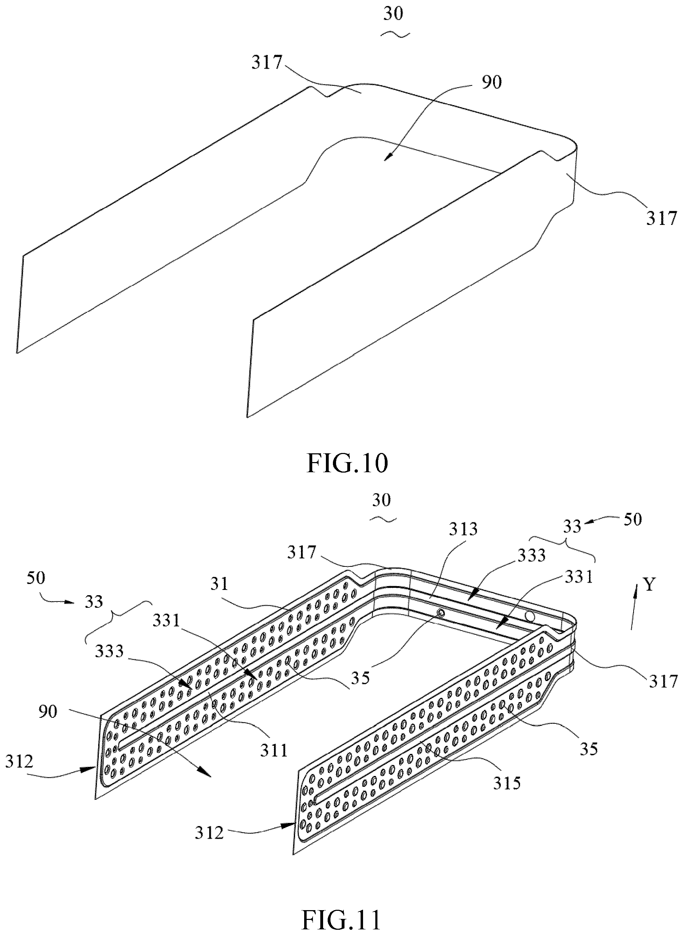

Please refer to FIGS. 9 and 10. In an embodiment, the first cooling plate 10 comprises a first body 11 and a first flow passage 13 provided on the first body 11. The first flow passage 13 extends along the length direction of the first body 11 and is formed by recessing from the first body 11 in a direction away from the accommodating space 90. The second cooling plate 30 is connected with the first body 11 in a sealed manner, and the first flow passage 13 and the second cooling plate 30 are matched to form the cooling flow passage 50 surrounding the accommodating space 90.

The first flow passage 13 comprises a first sub flow passage 131 and a second sub flow passage 133 distributed in the first body 11. The first sub flow passage 131 and the second sub flow passage 133 are communicated with each other, and the connected first sub flow passage 131 and second sub flow passage 133 together form the first flow passage 13 in an annular shape. The first sub flow passage 131 and the second sub flow passage 133 are connected at the ends 112 of the first body 11, and other part of the first sub flow passage 131 and other part of the second sub flow passage 133 are arranged in parallel at intervals in the height direction Y of the first body 11, that is, the interval part space therebetween is not provided with any flow passage. In addition, the first flow passage 13 is not provided on the peripheral edge portion of the first body 11, and the portion of the first body 11 that is not provided with the first flow passage 13 is used to abut against the second cooling plate 30.

The surface of the second cooling plate 30 is flat. In this case, the cooling flow passage 50 of the liquid cooling plate 100 is the first flow passage 13. The peripheral edge portion of the first body 11 that is not provided with the first flow passage 13 abuts against the second cooling plate 30, and the interval part between the first sub flow passage 131 and the second sub flow passage 133 abuts against the second cooling plate 30. The first body 11 and the second cooling plate 30 are fixedly connected by welding, and the first flow passage 13 on the first body 11 is sealed, which can effectively prevent the cooling medium in the first flow passage 13 from leaking.

Referring to FIGS. 9 and 11, in another embodiment, the second cooling plate 30 comprises a second body 31 and a second flow passage 33 provided in the second body 31. The second body 31 is arranged side by side with the first body 11 on the side of the first body 11 facing the accommodating space 90. The second flow passage 33 extends along the length direction of the second body 31 and is formed by recessing from the second body 31 in a direction toward the accommodating space 90. The second flow passage 33 corresponds to the first flow passage 13, and the width of the second flow passage 33 is equal to the width of the first flow passage 13. In a case where the first body 11 and the second body 31 are connected with each other in a sealed manner, the second flow passage 33 and the second flow passage 33 are matched to jointly form the cooling flow passage 50 surrounding the accommodating space 90.

Similarly, the first flow passage 13 comprises a first sub flow passage 131 and a second sub flow passage 133 distributed in the first body 11. The first sub flow passage 131 and the second sub flow passage 133 are communicated with each other, and the connected first sub flow passage 131 and second sub flow passage 133 together form the first flow passage 13 in an annular shape.

Specifically, the first sub flow passage 131 and the second sub flow passage 133 are connected at the ends 112 of the first body 11, and the other part of the first sub flow passage 131 and the other part of the second sub flow passage 133 are arranged in parallel at intervals in the height direction Y, that is, the interval part spaced therebetween is not provided with any flow passage. The second flow passage 33 comprises a third sub flow passage 331 and a fourth sub flow passage 333 distributed in the second body 31. The third sub flow passage 331 and the fourth sub flow passage 333 are communicated with each other, and the connected third sub flow passage 331 and fourth sub flow passage 333 together form the second flow passage 33 in an annular shape. Therefore, the cooling flow passage 50 formed jointly by the matched first passage 13 and second passage 33 is in an annular shape as a whole. Similarly, the third sub flow passage 331 and the fourth sub flow passage 333 are connected at the ends 312 of the second body 31, and the other part of the third sub flow passage 331 and the other part of the fourth sub flow passage 333 are arranged in parallel at intervals in the height direction Y. As such, one of the sub flow passages (for example, the first sub flow passage 131 or the third sub flow passage 331) can be used to be connected with a liquid inlet pipe 60 to input heat exchange medium into the flow passage, and another one of the sub flow passages (such as the second sub flow passage 133 or the fourth sub flow passage 333) can be used to connect the heat exchange medium after heat exchange to a liquid outlet pipe 80 to discharge it out of the cooling flow passage 50. There is no flow passage provided in the interval part, and the interval part between the third sub flow passage 331 and the fourth sub flow passage 333 and the interval part between the first sub flow passage 131 and the second sub flow passage 133 abut against each other

The first flow passage 13 and the second flow passage 33 being matched to form the cooling flow passage 50 means that when the first body 11 and the second body 31 are attached and welded to each other to form the liquid cooling plate 100, the part of the first body 11 that is not provided with the first flow passage 13 and the part of the second body 31 that is not provided with the second flow passage 33 abut against each other, the first flow passage 13 and the second flow passage 33 are opposite in the thickness direction of the liquid cooling plate 100, and the first flow passage 13 and the second flow passage 33 together form the cooling flow passage 50.

Specifically, the first flow passage 13 is not provided on the peripheral edge of the first body 11, and the second flow passage 33 is not provided on the peripheral edge of the second body 31. When the first body 11 and the second body 31 are welded, the peripheral edge of the first body 11 and the peripheral edge of the second body 31 can be welded so that the first body 11 and the second body 31 are connected in a sealed manner, and thus first flow passage 13 and the second flow passage 33 are sealed, which can effectively prevent the heat exchange medium in the first flow passage 13 from leaking.

Alternatively, when the peripheral edges of the first body 11 and the second body 31 are weld, the interval part between the third sub flow passage 331 and the fourth sub flow passage 333 and the interval part between the first sub flow passage 131 and the second sub flow passage 133 can also abut against each other and then welded with each other so as to strengthen the stability of the welding between the first cooling plate 10 and the second cooling plate 30.

Compared with the cooling flow passage 50 formed by the first flow passage 13, the cooling flow passage 50 jointly formed by the matched second flow passage 33 and first flow passage 13, with the addition of the second flow passage 33, results in a larger volume of the cooling flow passage 50, and more heat exchange medium can be input into the cooling flow passage 50 at one time, which effectively improves the heat exchange efficiency between the heat exchange medium and the battery modules 300. In the present disclosure, the structure of the liquid cooling plate 100 is described in detail in an example where the first cooling plate 10 is formed with the first flow passage 13 and the second cooling plate 30 is formed with the second flow passage 33.

In an embodiment of the present disclosure, a width of the second flow passage 33 is equal to a width of the first flow passage 13. When the first body 11 and the second body 31 are opposite and attached to each other, the side wall of the first flow passage 13 can abut against the side wall of the second flow passage 13, sealing the first flow passage 13 and the second flow passage 33.

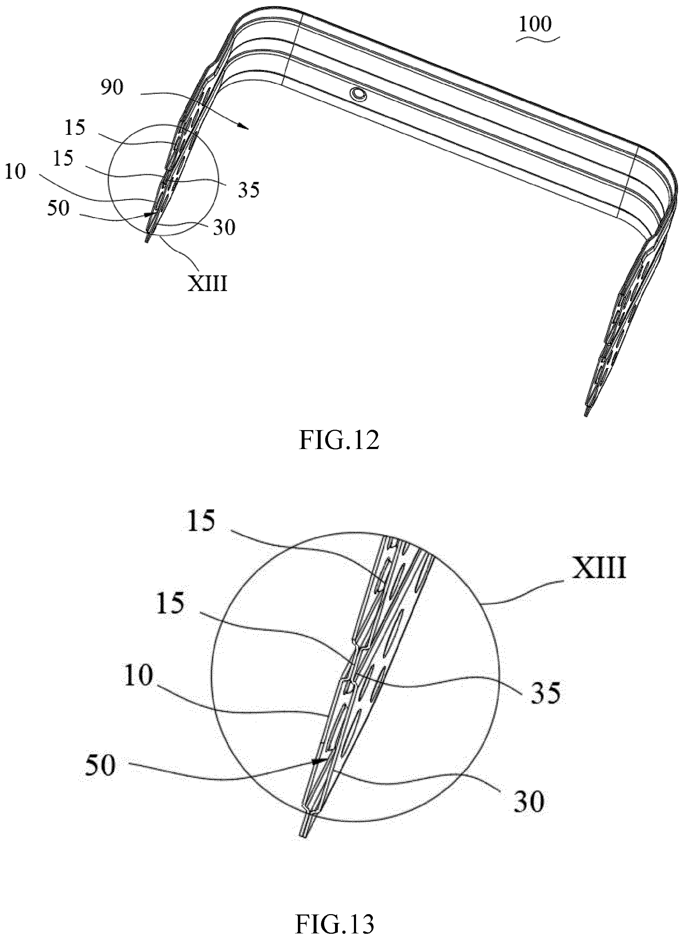

Please refer to FIGS. 12 and 13, the first cooling plate 10 further comprises a first flow disturbing part 15 provided on the first flow passage 13 along the extension direction of the first flow passage 13. The first flow disturbing part 15 is formed to protrude from the side wall of the first flow passage 13 in the direction toward the accommodating space 70.

The number of first flow disturbing parts 15 is multiple, and the multiple first flow disturbing parts 15 may be evenly distributed on the side wall of the first flow passage 13, or the multiple first flow disturbing parts 15 may be unevenly spaced on the side wall of the first flow passage 13. By providing the first flow disturbing parts 15, the heat exchange medium input into the first flow passage 13 can be diverted, which increases the flow path of the heat exchange medium in the first flow passage 13, and effectively prolongs the time duration of the heat exchange between the heat exchange medium and the battery modules 300, thereby achieving higher heat exchange efficiency.

The first flow disturbing part 15 has a hemispherical structure. When the heat exchange medium in the first flow passage 13 passes the surface of the first flow disturbing part 15, the heat exchange medium can flow around the first flow disturbing part 15, so as to form a reverse flow around the first flow disturbing part 15, prolonging the time duration of the heat exchange between the heat exchange medium and the battery modules 300, thereby improving the heat exchange efficiency.

Similarly, the second cooling plate 30 also comprises a second flow disturbing part 35 provided on the second flow passage 33 along the extension direction of the second flow passage 33. The second spoiler 35 is formed to protrude from the side wall of the second flow passage 33 in a direction away from the accommodating space 90. The structure of the second flow disturbing part 35 is the same as that of the first flow disturbing part 15. The number of the second flow disturbing parts 35 is the same as the number of the first flow disturbing parts 15, which will not be described again.

In an embodiment, when the first body 11 and the second body 31 are connected in a sealed manner, the first flow disturbing parts 15 and the second flow disturbing parts 35 may be arranged to be staggered, and the first flow disturbing parts 15 and the second flow disturbing parts 35 are both used to divert the heat exchange medium in the cooling flow passage 50 so as to increase the fluidity of the heat exchange medium in the flow passage 50, thereby improving the heat exchange efficiency between the heat exchange medium and the battery modules 300.

In another embodiment, when the first body 11 and the second body 31 are connected in a sealed manner, the first flow disturbing parts 15 and the second flow disturbing parts 35 abut against each other.

The depth that the first flow passage 13 is recessed is equal to the height that the first flow disturbing part 15 protrudes, and the depth that the second flow passage 33 is recessed is equal to the height that the second flow disturbing part 35 protrudes. Therefore, when the peripheral edge surface of the first body 11 and the peripheral edge surface of the second body 31 are welded, both of the first flow disturbing parts 15 and the second flow disturbing parts 35 will not affect the sealing of the connection between the first body 11 and the second body 31, ensuring the sealing of the connection between the first body 11 and the second body 31.

Referring to FIG. 9, the first body 11 comprises a first segment 111, two first bent parts 117, a second segment 113 and a third segment 115. Two ends of one of the first bent parts 117 are connected with the first segment 111 and the second segment 113 respectively, and two ends of the other first bent part 117 are connected with the third segment 115 and the second segment 113 respectively. The second segment 113 is located between the first segment 111 and the third segment 115.

In an embodiment of the present disclosure, the first segment 111, the two first bent parts 117, the second segment 113 and the third segment 115 are of an integral structure, and the first body 11 is obtained through stamping and bending process using a profiling mold. The first segment 111, the two first bent parts 117, the second segment 113 and the third segment 115 are connected without a connecting structure such as a quick-connect connector, and there is no interface for connection through a quick-connect connector between the three, and there is no leakage failure of the heat exchange medium in the first flow passage 13, so that the liquid cooling plate 100 has high safety performance. Moreover, the first segment 111, the two first bent parts 117, the second segment 113 and the third segment 115 do not need any connection structure such as quick-plug connectors for connection, which can effectively reduce the cost.

Please refer to FIG. 17. The first segment 111, the two first bent parts 117, the second segment 113 and the third segment 115 connected in sequence form a U-shaped structure. The first segment 111 and the third segment 115 are opposite. The length of the first segment 111 and the length of the third segment 115 can be set according to the length of the battery module 300. Specifically, the length of the first segment 111 and the length of the third segment 115 are slightly larger than the length of one column of battery modules 300. The second segment 113 corresponds to the width of the two columns of battery modules 300, and the length of the second segment 113 is slightly larger than the width of the battery modules 300, ensuring that two columns of battery modules 300 can be placed in the accommodating space 90.

Referring to FIGS. 9 and 11, similarly, the second body 31 comprises a fourth segment 311, two second bent parts 317, a fifth segment 313 and a sixth segment 315. The fourth segment 311 corresponds to the first segment 111 and is matched and connected with the first segment 111. Two ends of one of the two second bent parts 317 are respectively connected with the fifth segment 313 and the fourth segment 311, and the fifth segment 313 corresponds to and is matched and connected with the second segment 113. Two ends of the other one of the two second bent parts 317 are respectively connected with the sixth segment 315 and the fifth segment 313. The sixth segment 315 corresponds to and is matched and connected with the third segment 115. The fifth segment 313 is located between the fourth segment 311 and sixth segment 315.

In an embodiment of the present disclosure, the fourth segment 311, the two second bent parts 317, the fifth segment 313 and the sixth segment 315 are of an integral structure, and the second body 31 is obtained through stamping and bending process using a profiling mold. The fourth segment 311, the two second bent parts 317, the fifth segment 313 and the sixth segment 315 do not need to be connected through a connection structure such as a quick-connect connector, there is no interface for connection through a quick connector between the three, and there is no leakage failure of the heat exchange medium in the first flow passage 13, so that the liquid cooling plate 100 has high safety performance. Moreover, the fourth segment 311, the two second bent parts 317, the fifth segment 313, and the sixth segment 315 do not need a connection structure such as a quick-plug connector for connection, which can effectively reduce the cost.

Please refer to FIG. 17, the fourth segment 311, the two second bent parts 317, the fifth segment 313 and the sixth segment 315 connected in sequence form a U-shaped structure. The fourth segment 311 and the sixth segment 315 are opposite. The length of the fourth segment 311 and the length of the sixth segment 315 can be set according to the length of a column of battery modules 300 and can be equal to the length of the first segment 111 and the length of the third segment 115 respectively. Specifically, the length of the fourth segment 311 and the length of the sixth segment 315 are both slightly larger than the length of the battery modules 300. The fifth segment 313 corresponds to the width of the two columns of battery modules 300, and the length of the fifth segment 313 is greater than the width of the two columns of battery modules 300, ensuring that the two columns of battery modules 300 can be placed in the accommodating space 90.

It should be noted that the first segment 111, the two first bent parts 117, the second segment 113, and the third segment 115 may be in separate structures. The first segment 117, the two first bent parts 117, the second segment 113, and the third segment 115 are connected by welding. Similarly, the fourth segment 311, the two second bent parts 317, the fifth segment 313, and the sixth segment 315 may be in separate structures. The fourth segment 311, the two second bent parts 317, the fifth segment 313 and the sixth segment 315 are connected by welding. Specifically, when the first body 11 and the second body 31 are welded to form the liquid cooling plate 100, the first segment 111 and the fourth segment 311 are attached to each other, the first bent part 117 and the second bent part 317 are attached to each other, the second segment 113 and the fifth segment 313 are attached to each other, and the third segment 115 and the sixth segment 315 are attached to each other. When the liquid cooling plate 100 exchanges heat with the four columns of battery modules 300, the first segment 111 and the fourth segment 311 are respectively located between the third column of battery modules 300 and the fourth column of battery modules 300, and the first segment 111 and the fourth segment 311 are used to exchange heat with the third column of battery modules 300 and the fourth column of battery modules 300. The third segment 115 and the sixth segment 315 are located between the first column of battery modules 300 and the second column of battery modules 300, and the third segment 115 and the sixth segment 315 are used to exchange heat with the first column of battery modules 300 and the second column of battery modules 300. When the heat exchange medium is introduced into the cooling flow passage 50, the heat dissipated by the four columns of battery modules 300 is exchanged with the heat exchange medium in the cooling flow passage 50 through the first segment 111, the fourth segment 311, the third segment 115 and the sixth segment 315.

In an embodiment of the present disclosure, the number of the first flow disturbing parts 15 on the first segment 111 and the third segment 115 is greater than the number of the first flow disturbing parts 15 on the second segment 113, and the number of the second flow disturbing parts 35 on the fourth segment 311 and the sixth segment 315 is greater than the number of the second flow disturbing parts 35 on the fifth segment 313, ensuring a longer time duration of the heat exchange between the heat exchange medium in the cooling flow passage 50 of the liquid cooling plate 100 and the battery modules 300, thereby improving the heat exchange efficiency.

Please continue to refer to FIG. 7 and FIG. 9. The first sub flow passage 131 and the second sub flow passage 133 extend through the first segment 111, the second segment 113 and the third segment 115. The third sub flow passage 331 and the fourth sub flow passage 333 extend through the fourth segment 311, the fifth segment 313 and the sixth segment 315. The first sub flow passage 131 corresponds to the third sub flow passage 331, the width of the first sub flow passage 131 is equal to the width of the third sub flow passage 331, the second sub flow passage 133 corresponds to the fourth sub flow passage 333, and the width of the second sub flow passage 133 is equal to the width of the fourth sub flow passage 333.

Please refer to FIG. 3. In an embodiment of the present disclosure, the number of reinforcement members 70 is multiple. The multiple reinforcement members 70 are disposed in the first sub flow passage 131 and the third sub flow passage 331 between the first bent part 117 and the second bent part 317, and the multiple reinforcement members 70 are disposed in the second sub flow passage 133 and the fourth sub flow passage 333 between the first bent part 117 and the second bent part 317.

The width of the first sub flow passage 131 at the first segment 111 and the width of the first sub flow passage 131 at the third segment 115 are both greater than or equal to the width of the first sub flow passage 131 at the second segment 113. The width of the second sub flow passage 133 of the first segment 111 and the width of the second sub flow passage 133 of the third segment 115 are both greater than or equal to the width of the second sub flow passage 133 of the second segment 113. The width of the first sub flow passage 131 at the first segment 111 and the width of the first sub flow passage 131 at the third segment 115 are both greater than or equal to the width of the first sub flow passage 131 at the first bent part 117. The width of the second sub flow passage 133 at the first segment 111 and the width of the second sub flow passage 133 at the third segment 115 are both greater than or equal to the width of the second sub flow passage 133 at the first bent part 117. In the present disclosure, the first sub flow passage 131 and the second sub flow passage 133 with a larger width are provided in the part where the first cooling plate 10 and the battery module 300 (shown in FIG. 17) have a larger contact area, which can effectively improve the heat exchange efficiency.

The width of the third sub flow passage 331 of the fourth segment 311 and the width of the third sub flow passage 331 of the sixth segment 315 are both greater than or equal to the width of the third sub flow passage 331 of the fifth segment 313 . The width of the fourth sub flow passage 333 of the fourth segment 311 and the width of the fourth sub flow passage 333 of the sixth segment 315 are both greater than or equal to the width of the fourth sub flow passage 333 of the fifth segment 313. The width of the third sub flow passage 331 of the fourth segment 311 and the width of the third sub flow passage 331 of the sixth segment 315 are both greater than or equal to the width of the third sub flow passage 331 of the second bent part 317. The width of the fourth sub flow passage 333 of the fourth segment 311 and the width of the fourth sub flow passage 333 of the sixth segment 315 are both greater than or equal to the width of the fourth sub flow passage 333 of the second bent part 317. In the present disclosure, the third sub flow passage 331 and the fourth sub flow passage 333 with a larger width are provided in the part where the second cooling plate 30 has a larger contact area with the battery modules 300, which can effectively improve the heat exchange efficiency.

It should be noted that the width of each of the sub flow passages mentioned above refers to the length of the sub flow passage extending in the Y direction shown in FIG. 2.

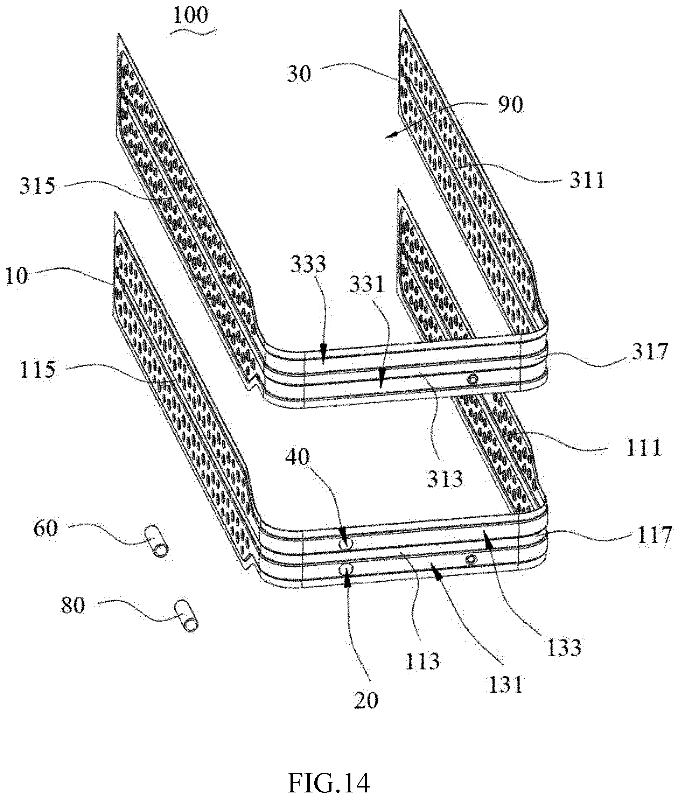

Please refer to FIG. 14. In an embodiment, the second segment 113 is provided with a first through-hole 20 connected with the first sub flow passage 131, and the second segment 113 is provided with a second through-hole 40 connected with the second sub flow passage 133. The first through-hole 20 is used to connect one of the liquid inlet pipe 60 and the liquid outlet pipe 80, and the second through-hole 40 is used to connect the other of the liquid inlet pipe 60 and the liquid outlet pipe 80. For example, the first through-hole 20 is used to connect the liquid inlet pipe 60, and the second through-hole 40 is used to connect the liquid outlet pipe 80. In this case, when the heat exchange medium is input into the liquid inlet pipe 60, the heat exchange medium flows into the sub flow passage formed by the first sub flow passage 131 and the third sub flow passage 331 through the first through-hole 20, and then flows into the sub flow passage jointly formed by the second sub flow passage 133 and the fourth sub flow passage 333, and is finally discharged from the liquid outlet pipe 80 connected to the second through-hole 40. In this embodiment, in the Y direction, the center of the first through-hole 20 and the center of the second through-hole 40 are located on a straight line; or, in the Y direction, the center of the first through-hole 20 and the center of the second through-hole 40 are located on different straight lines.

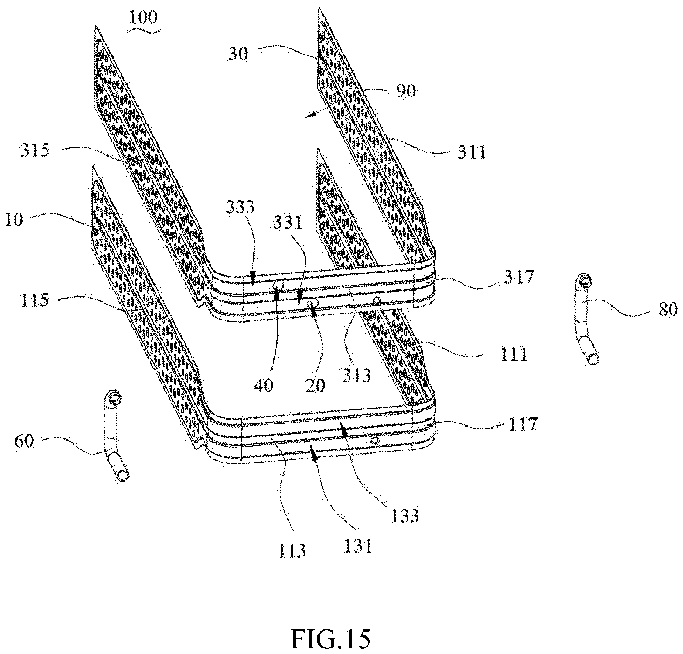

Please refer to FIG. 15. In another embodiment, the fifth segment 313 is provided with a first through-hole 20 connected with the third sub flow passage 331, and the fifth segment 313 is provided with a second through-hole 40 connected with the fourth sub flow passage 333. The first through-hole 20 is used to connect one of the liquid inlet pipe 60 and the liquid outlet pipe 80, and the second through-hole 40 is used to connect the other of the liquid inlet pipe 60 and the liquid outlet pipe 80. The present embodiment differs from the above-mentioned embodiments in that the first through-hole 20 and the second through-hole 40 are provided on the fifth segment 313 of the second body 31. In this case, the liquid inlet pipe 60 and the liquid outlet pipe 80 extend into the accommodating space 90 from the bottom of the liquid cooling plate 100 and are connected with the first through-hole 20 and the second through-hole 40.

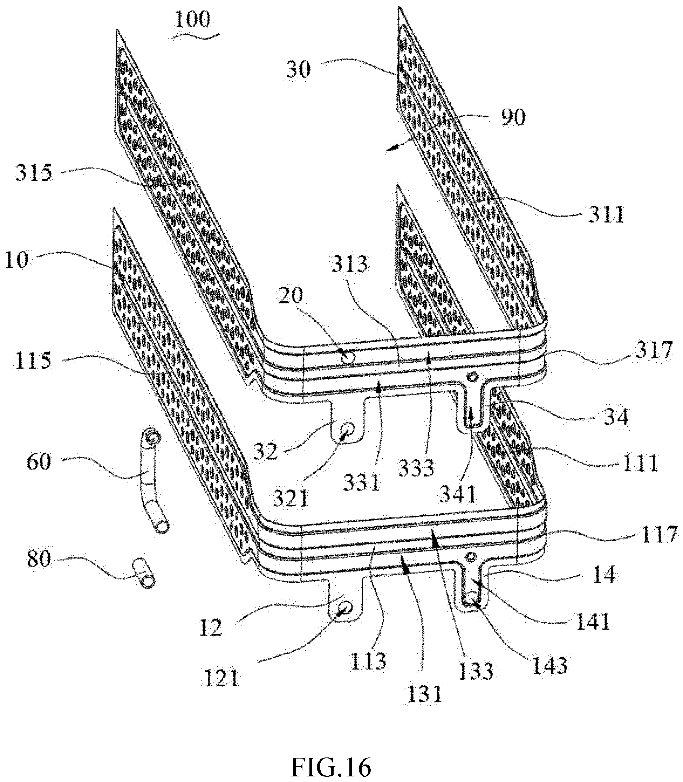

Please refer to FIG. 16. In yet another embodiment, the first cooling plate 10 further comprises a first connection part 12 and a second connection part 14 disposed on the second segment 113. The first connection part 12 is spaced apart from the second connection part 14. The first connection part 12 is provided with a first opening 121. The second connection part 14 is provided with a third flow passage 141 connected with the first sub flow passage 131. The third flow passage 141 is formed by recessing from the second connection part 14 in a direction away from the accommodating space 90. The second connection part 14 is provided with a second opening 143 that is connected with the third flow passage 141.

The second cooling plate 30 further comprises a third connection part 32 and a fourth connection part 34 provided on the fifth segment 313. The third connection part 32 is spaced apart from the fourth connection part 34, the third connection part 32 is matched with the first connection part 12, and the fourth connection part 34 is matched with the second connection part 14. The third connection part 32 is provided with a third opening 321, and the third opening 321 corresponds to the first opening 121. The fourth connection part 34 is provided with a fourth flow passage 341 connected with the third sub flow passage 331. The fourth flow passage 341 is formed by recessing from the fourth connection part 34 in the direction toward the accommodating space 90. The fourth flow passage 341 corresponds to and is matched with the third flow passage 141 to form a branch flow passage communicated with the cooling flow passage 50, and the branch flow passage is used to be connected with the liquid inlet pipe 60 or the liquid outlet pipe 80.

By providing the first connection part 12, the second connection part 14, the third connection part 32 and the fourth connection part 34, the liquid inlet pipe 60 and the liquid outlet pipe 80 can extend out at the same height.

Specifically, the fifth segment 313 is provided with a first through-hole 20 connected with the fourth sub flow passage 333. When the first cooling plate 10 and the second cooling plate 30 are connected in a sealed manner, the first opening 121 and the third opening 321 are coaxially arranged. The first through-hole 20, the first opening 121 and the third opening 321 are jointly used to connect one of the liquid inlet pipe 60 and the liquid outlet pipe 80, and the second opening 143 is used to connect the other of the liquid inlet pipe 60 and the liquid outlet pipe 80. For example, the first through-hole 20, the first opening 121 and the third opening 321 are jointly used to connect the liquid inlet pipe 60, and the second opening 143 is used to connect the liquid outlet pipe 80. The liquid inlet pipe 60 has a U-shaped structure, one end of the liquid inlet pipe 60 is connected with the first through-hole 20, and the other end of the liquid inlet pipe 60 extends out from the accommodating space 90 to be connected to the first opening 121 and the third opening 321. The liquid outlet pipe 80 is connected to the second opening 143, and connected with the third flow passage 141 and the fourth flow passage 341.

Please refer to FIG. 16 and FIG. 17, in an embodiment of the present disclosure, there is also provided a battery pack 1000. The battery pack 1000 comprises at least one battery module 300 and the liquid cooling plate 100 described in any embodiment of the present disclosure. The liquid cooling plate 100 is used to perform heat exchange with the at least one battery module 300.

The battery pack 1000 comprises one or more battery modules 300. When multiple battery modules 300 are comprised, the multiple battery modules 300 are arranged in parallel. Each battery module 300 can be placed in the accommodating space 90 of a liquid cooling plate 100. Therefore, multiple surfaces of each of the battery module 300 can be attached to the liquid cooling plate 100, thereby increasing the heat exchange area between the battery module 300 and the liquid cooling plate 100, and thus improving the heat exchange efficiency.

The battery pack 1000 comprises one or more battery modules 300. When multiple battery modules 300 are comprised, the multiple battery modules 300 are arranged in parallel. For example, a battery pack 1000 comprises four columns of battery modules 300. The first column of battery modules 300 is placed on one side of the liquid cooling plate 100, the second column of battery modules 300 and the third column of battery modules 300 are both placed in the accommodating space 90, and the fourth column of battery modules 300 is placed on the other side of the liquid cooling plate 100, as shown in FIG. 17. Part of the structure of the liquid cooling plate 100 is located between the first column of battery modules 300 and the second column of battery modules 300, and this part of the liquid cooling plate 100 performs heat exchange with both the first column of battery modules 300 and the second column of battery modules 300. Part of the structure of the liquid cooling plate 100 is located between the third column of battery modules 300 and the fourth column of battery modules 300, and this part of the liquid cooling plate 100 performs heat exchange with both the third column of battery modules 300 and the fourth column of battery modules 300. The heat exchange processing for the multiple battery modules 300 is realized through one liquid cooling plate 100, which improves the heat exchange efficiency of the liquid cooling plate 100 with the battery pack 1000, and can effectively reduce the cost at the same time. Moreover, the first cooling plate 10 and the second cooling plate 30 do not need to be connected through quick-plug connectors, and thus the assembling of the liquid cooling plate 100 is simple.

Of course, in the battery pack 1000, one liquid cooling plate 100 can be used to exchange heat with a plurality of battery modules 300. For example, when the battery pack 1000 comprises one column of battery modules 300, the column of battery modules 300 can be placed in the accommodating space 90 of the liquid cooling plate 100, so that multiple surfaces of the column of battery modules 300 all can be attached to the liquid cooling plate 100, which increases the heat exchange area between the battery modules 300 and the liquid cooling plate 100, thereby improving the heat exchange efficiency.

The battery module 300 comprises a plurality of battery cells. Specifically, the battery cell may be a lead-acid battery, a nickel-metal hydride battery, a lithium battery, a lithium iron phosphate battery, or a ternary battery. The battery cell may be in the shape of a rectangular parallelepiped or a cylinder, and the shape of the battery cell is not limited here.

The battery pack 1000 may also comprise an upper cover 400 and a lower box body 500. The upper cover 400 and the lower box body 500 are used to encapsulate and protect the battery modules 300 and the liquid cooling plate 100.

Those described above are only the some of the embodiments of the present disclosure. It should be noted that improvements and modifications can also be made by those skilled in the art without departing from the scope of the invention as defined by the appended claims.

## Claims

1. A liquid cooling plate (100), comprising:
a first cooling plate (10), comprising a first bent part (117);
a second cooling plate (30), arranged side by side with the first cooling plate (10) and connected with the first cooling plate (10) in a sealed manner, wherein a cooling flow passage (50) is formed between the second cooling plate (30) and the first cooling plate (10), and the second cooling plate (30) comprises a second bent part (317) that corresponds to the first bent part (117); and
at least a reinforcement member (70), provided in the cooling flow passage (50) between the first bent part (117) and the second bent part (317),
**characterised in that**
the reinforcement member (70) has an arc-shaped structure, and a curvature in which the reinforcement member (70) is bent is the same as a curvature in which the first bent part (117) and the second bent part (317) are bent.

2. The liquid cooling plate (100) according to claim 1, wherein a passage (71) is formed in the reinforcement member (70), the passage (71) penetrates the reinforcement member (70) along an extension direction of the cooling flow passage (50) and is communicated with the cooling flow passage (50).

3. The liquid cooling plate (100) according to claim 2, wherein the reinforcement member (70) further comprises a plurality of spacer sheets (73), the plurality of spacer sheets (73) are disposed in the passage (71) along an extension direction of the passage (71), and the plurality of spacer sheets (73) divide the passage (71) into a plurality of sub passages (711), wherein the plurality of sub passages (711) are all communicated with the cooling flow passage (50).

4. The liquid cooling plate (100) according to claim 2, wherein the reinforcement member (70) comprises a first sub-part (75), a second sub-part (76) and at least a third sub-part (77), the first sub-part (75) and the second sub-part (76) are arranged oppositely, two ends of at least one of the third sub-part (77) are connected with the first sub-part (75) and the second sub-part (76) respectively, and at least one of the third sub-part (77) divides the passage (71) into at least two sub passages (711).

5. The liquid cooling plate (100) according to claim 1, wherein the reinforcement member (70) is made of a foam metal.

6. The liquid cooling plate (100) according to claim 1 or 5, wherein the reinforcement member (70) is formed with a plurality of air holes (72), and the air holes (72) are communicated with the cooling flow passage (50) to allow a heat exchange medium in the cooling flow passage (50) to pass through.

7. The liquid cooling plate (100) according to claim 1, wherein the first cooling plate (10) and the second cooling plate (30) are formed with an accommodating space (90), the first cooling plate (10) comprises a first body (11) and a first flow passage (13) provided on the first body (11), the first flow passage (13) extends along a length direction of the first body (11) and is formed by recessing from the first body (11) in a direction away from the accommodating space (90); the second cooling plate (30) comprises a second body (31) and a second flow passage (33) provided on the second body (31), the second body (31) is arranged side by side with the first body (11) on a side of the first body (11) facing the accommodating space (90), the second flow passage (33) extends along a length direction of the second body (31) and is formed by recessing from the second body (31) in a direction toward the accommodating space (90), the second flow passage (33) corresponds to the first flow passage (13), the first body (11) is connected with the second body (31) in a sealed manner, and the second flow passage (33) and the first flow passage (13) are matched to jointly form the cooling flow passage (50) surrounding the accommodating space (90).

8. The liquid cooling plate (100) according to claim 7, wherein the first flow passage (13) comprises a first sub flow passage (131) and a second sub flow passage (133) distributed in the first body (11), the first sub flow passage (131) and the second sub flow passage (133) are communicated with each other;
the second flow passage (33) comprises a third sub flow passage (331) and a fourth sub flow passage (333) distributed in the second body (31), the third sub flow passage (331) and the fourth sub flow passage (333) are communicated with each other, and the first sub flow passage (131) corresponds to the third sub flow passage (331).

9. The liquid cooling plate (100) according to claim 8, wherein the liquid cooling plate (100) comprises a plurality of reinforcement members (70), the plurality of reinforcement members (70) are disposed in the first sub flow passage (131) and the third sub flow passage (331) between the first bent part (117) and the second bent part (317); and
the plurality of reinforcement members (70) are disposed in the second sub flow passage (133) and the fourth sub flow passage (333) between the first bent part (117) and the second bent part (317).

10. A battery pack (1000), comprising:
at least a battery module (300); and
a liquid cooling plate (100) according to any one of claims 1 to 9, wherein the liquid cooling plate (100) performs a heat exchange with the at least one battery module (300).

## Patentansprüche

1. Flüssigkeitskühlplatte (100), umfassend:
eine erste Kühlplatte (10), umfassend einen ersten gebogenen Teil (117);
eine zweite Kühlplatte (30), die neben der ersten Kühlplatte (10) angeordnet und mit der ersten Kühlplatte (10) abgedichtet verbunden ist, wobei zwischen der zweiten Kühlplatte (30) und der ersten Kühlplatte (10) ein Kühlströmungsdurchgang (50) ausgebildet ist, und die zweite Kühlplatte (30) einen zweiten gebogenen Teil (317) umfasst, der dem ersten gebogenen Teil (117) entspricht; und
mindestens ein Verstärkungselement (70), das in dem Kühlströmungsdurchgang (50) zwischen dem ersten gebogenen Teil (117) und dem zweiten gebogenen Teil (317) vorgesehen ist,
**dadurch gekennzeichnet, dass**
das Verstärkungselement (70) eine bogenförmige Struktur aufweist, und eine Krümmung, in der das Verstärkungselement (70) gebogen ist, dieselbe ist wie eine Krümmung, in der der erste gebogene Teil (117) und der zweite gebogene Teil (317) gebogen sind.

2. Flüssigkeitskühlplatte (100) gemäß Anspruch 1, wobei ein Durchgang (71) in dem Verstärkungselement (70) ausgebildet ist, der Durchgang (71) das Verstärkungselement (70) entlang einer Erstreckungsrichtung des Kühlströmungsdurchgangs (50) durchdringt und mit dem Kühlströmungsdurchgang (50) in Verbindung steht.

3. Flüssigkeitskühlplatte (100) gemäß Anspruch 2, wobei das Verstärkungselement (70) ferner eine Vielzahl von Abstandsblechen (73) umfasst, die Vielzahl von Abstandsblechen (73) sich in dem Durchgang (71) entlang einer Erstreckungsrichtung des Durchgangs (71) befindet und die Vielzahl von Abstandsblechen (73) den Durchgang (71) in eine Vielzahl von Unter-Durchgängen (711) unterteilt, wobei die Vielzahl von Unter-Durchgängen (711) alle mit dem Kühlströmungsdurchgang (50) in Verbindung stehen.

4. Flüssigkeitskühlplatte (100) gemäß Anspruch 2, wobei das Verstärkungselement (70) ein erstes Unter-Teil (75), ein zweites Unter-Teil (76) und mindestens ein drittes Unter-Teil (77) umfasst, wobei das erste Unter-Teil (75) und das zweite Unter-Teil (76) gegenüberliegend angeordnet sind, zwei Enden von mindestens einem der dritten Unter-Teile (77) mit dem ersten Unter-Teil (75) bzw. dem zweiten Unter-Teil (76) verbunden sind, und mindestens eines der dritten Unter-Teile (77) den Durchgang (71) in mindestens zwei Unter-Durchgänge (711) unterteilt.

5. Flüssigkeitskühlplatte (100) gemäß Anspruch 1, wobei das Verstärkungselement (70) aus einem Schaummetall besteht.

6. Flüssigkeitskühlplatte (100) gemäß Anspruch 1 oder 5, wobei das Verstärkungselement (70) mit einer Vielzahl von Luftlöchern (72) ausgebildet ist und die Luftlöcher (72) mit dem Kühlströmungsdurchgang (50) in Verbindung stehen, um es einem Wärmeaustauschmedium in dem Kühlströmungsdurchgang (50) zu ermöglichen, hindurchzutreten.

7. Flüssigkeitskühlplatte (100) gemäß Anspruch 1, wobei die erste Kühlplatte (10) und die zweite Kühlplatte (30) mit einem Aufnahmeraum (90) ausgebildet sind, die erste Kühlplatte (10) einen ersten Körper (11) und einen ersten Strömungsdurchgang (13) umfasst, der an dem ersten Körper (11) vorgesehen ist, der erste Strömungsdurchgang (13) sich entlang einer Längsrichtung des ersten Körpers (11) erstreckt und durch Aussparung von dem ersten Körper (11) in einer Richtung weg von dem Aufnahmeraum (90) ausgebildet ist; die zweite Kühlplatte (30) einen zweiten Körper (31) und einen zweiten Strömungsdurchgang (33) umfasst, der an dem zweiten Körper (31) vorgesehen ist, der zweite Körper (31) neben dem ersten Körper (11) auf einer Seite des ersten Körpers (11) angeordnet ist, die dem Aufnahmeraum (90) zugewandt ist, der zweite Strömungsdurchgang (33) sich entlang einer Längsrichtung des zweiten Körpers (31) erstreckt und durch Aussparung von dem zweiten Körper (31) in einer Richtung zu dem Aufnahmeraum (90) hin ausgebildet ist, der zweite Strömungsdurchgang (33) dem ersten Strömungsdurchgang (13) entspricht, der erste Körper (11) mit dem zweiten Körper (31) in abgedichteter Weise verbunden ist, und der zweite Strömungsdurchgang (33) und der erste Strömungsdurchgang (13) so aufeinander abgestimmt sind, dass sie gemeinsam den den Aufnahmeraum (90) umgebenden Kühlströmungsdurchgang (50) bilden.

8. Flüssigkeitskühlplatte (100) gemäß Anspruch 7, wobei der erste Strömungsdurchgang (13) einen ersten Unter-Strömungsdurchgang (131) und einen zweiten Unter-Strömungsdurchgang (133) umfasst, die in dem ersten Körper (11) verteilt sind, der erste Unter-Strömungsdurchgang (131) und der zweite Unter-Strömungsdurchgang (133) miteinander verbunden sind;
der zweite Strömungsdurchgang (33) einen dritten Unter-Strömungsdurchgang (331) und einen vierten Unter-Strömungsdurchgang (333) umfasst, die in dem zweiten Körper (31) verteilt sind, der dritte Unter-Strömungsdurchgang (331) und der vierte Unter-Strömungsdurchgang (333) miteinander in Verbindung stehen, und der erste Unter-Strömungsdurchgang (131) dem dritten Unter-Strömungsdurchgang (331) entspricht.

9. Flüssigkeitskühlplatte (100) gemäß Anspruch 8, wobei die Flüssigkeitskühlplatte (100) eine Vielzahl von Verstärkungselementen (70) umfasst, wobei sich die Vielzahl von Verstärkungselementen (70) in dem ersten Unter-Strömungsdurchgang (131) und dem dritten Unter-Strömungsdurchgang (331) zwischen dem ersten gebogenen Teil (117) und dem zweiten gebogenen Teil (317) befinden; und
die sich Vielzahl von Verstärkungselementen (70) in dem zweiten Unter-Strömungsdurchgang (133) und dem vierten Unter-Strömungsdurchgang (333) zwischen dem ersten gebogenen Teil (117) und dem zweiten gebogenen Teil (317) befindet.

10. Batteriesatz (1000), umfassend:
mindestens ein Batteriemodul (300); und
eine Flüssigkeitskühlplatte (100) gemäß einem der Ansprüche 1 bis 9, wobei die Flüssigkeitskühlplatte (100) einen Wärmeaustausch mit dem mindestens einen Batteriemodul (300) durchführt.

## Revendications

1. Plaque de refroidissement de liquide (100), comprenant :
une première plaque de refroidissement (10), comprenant une première partie pliée (117) ;
une deuxième plaque de refroidissement (30), disposée côte à côte avec la première plaque de refroidissement (10) et reliée à la première plaque de refroidissement (10) de manière étanche, dans laquelle un passage de flux de refroidissement (50) est formé entre la deuxième plaque de refroidissement (30) et la première plaque de refroidissement (10), et la deuxième plaque de refroidissement (30) comprend une deuxième partie courbée (317) qui correspond à la première partie courbée (117) ; et
au moins un élément de renforcement (70), placé dans le passage de flux de refroidissement (50) entre la première partie courbée (117) et la deuxième partie courbée (317),
**caractérisé en ce que**
l'élément de renforcement (70) a une structure en forme d'arc, et une courbure dans laquelle l'élément de renforcement (70) est plié est la même qu'une courbure dans laquelle la première partie pliée (117) et la deuxième partie pliée (317) sont pliées.

2. Plaque de refroidissement de liquide (100) selon la revendication 1, dans laquelle un passage (71) est formé dans l'élément de renforcement (70), le passage (71) pénètre dans l'élément de renforcement (70) le long d'une direction d'extension du passage de flux de refroidissement (50) et est communiqué avec le passage de flux de refroidissement (50).

3. Plaque de refroidissement de liquide (100) selon la revendication 2, dans laquelle l'élément de renforcement (70) comprend en outre une pluralité de feuilles d'espacement (73), la pluralité de feuilles d'espacement (73) sont disposées dans le passage (71) le long d'une direction d'extension du passage (71), et la pluralité de feuilles d'espacement (73) divisent le passage (71) en une pluralité de sous-passages (711), dans lesquels la pluralité de sous-passages (711) sont tous communiqués avec le passage de flux de refroidissement (50).

4. Plaque de refroidissement de liquide (100) selon la revendication 2, dans laquelle l'élément de renforcement (70) comprend une première sous-partie (75), une deuxième sous-partie (76) et au moins une troisième sous-partie (77), la première sous-partie (75) et la deuxième sous-partie (76) étant disposées de manière opposée, deux extrémités d'au moins une des troisièmes sous-parties (77) sont reliées respectivement à la première sous-partie (75) et à la deuxième sous-partie (76), et au moins une des troisièmes sous-parties (77) divise le passage (71) en au moins deux sous-passages (711).

5. Plaque de refroidissement de liquide (100) selon la revendication 1, dans laquelle l'élément de renforcement (70) est constitué d'un métal alvéolaire.

6. Plaque de refroidissement de liquide (100) selon la revendication 1 ou 5, dans laquelle l'élément de renforcement (70) est formé avec une pluralité de trous d'air (72), et les trous d'air (72) sont communiqués avec le passage de flux de refroidissement (50) pour permettre à un milieu d'échange de chaleur dans le passage de flux de refroidissement (50) de passer à travers.

7. Plaque de refroidissement de liquide (100) selon la revendication 1, dans laquelle la première plaque de refroidissement (10) et la deuxième plaque de refroidissement (30) sont formées avec un espace de logement (90), la première plaque de refroidissement (10) comprend un premier corps (11) et un premier passage d'écoulement (13) fourni sur le premier corps (11), le premier passage d'écoulement (13) s'étend le long d'une direction de longueur du premier corps (11) et est formé par un évidement du premier corps (11) dans une direction opposée à l'espace de logement (90) ; la deuxième plaque de refroidissement (30) comprend un deuxième corps (31) et un deuxième passage d'écoulement (33) prévu sur le deuxième corps (31), le deuxième corps (31) est disposé côte à côte avec le premier corps (11) sur un côté du premier corps (11) faisant face à l'espace de logement (90), le deuxième passage d'écoulement (33) s'étend le long d'une direction de longueur du deuxième corps (31) et est formé par un évidement du deuxième corps (31) dans une direction vers l'espace de logement (90), le deuxième passage d'écoulement (33) correspond au premier passage d'écoulement (13), le premier corps (11) est relié au deuxième corps (31) de manière étanche, et le deuxième passage d'écoulement (33) et le premier passage d'écoulement (13) sont appariés pour former ensemble le passage de flux de refroidissement (50) entourant l'espace de logement (90).

8. Plaque de refroidissement de liquide (100) selon la revendication 7, dans laquelle le premier passage d'écoulement (13) comprend un premier passage d'écoulement secondaire (131) et un deuxième passage d'écoulement secondaire (133) répartis dans le premier corps (11), le premier passage d'écoulement secondaire (131) et le deuxième passage d'écoulement secondaire (133) sont en communication l'un avec l'autre ;
le deuxième passage d'écoulement (33) comprend un troisième passage d'écoulement secondaire (331) et un quatrième passage d'écoulement secondaire (333) répartis dans le deuxième corps (31), le troisième passage d'écoulement secondaire (331) et le quatrième passage d'écoulement secondaire (333) communiquent entre eux, et le premier passage d'écoulement secondaire (131) correspond au troisième passage d'écoulement secondaire (331).

9. Plaque de refroidissement de liquide (100) selon la revendication 8, dans laquelle la plaque de refroidissement de liquide (100) comprend une pluralité d'éléments de renforcement (70), la pluralité d'éléments de renforcement (70) sont disposés dans le premier passage d'écoulement secondaire (131) et le troisième passage d'écoulement secondaire (331) entre la première partie courbée (117) et la deuxième partie courbée (317) ; et
la pluralité d'éléments de renforcement (70) est disposée dans le deuxième passage d'écoulement secondaire (133) et le quatrième passage d'écoulement secondaire (333) entre la première partie courbée (117) et la deuxième partie courbée (317).

10. Ensemble de batteries (1000) comprenant :
au moins un module de batterie (300) ; et
une plaque de refroidissement de liquide (100) selon l'une quelconque des revendications 1 à 9, dans laquelle la plaque de refroidissement de liquide (100) effectue un échange de chaleur avec au moins un module de batterie (300).
